# EUROPÄISCHE PATENTSCHRIFT

(11) **EP 0 487 501 B1**
(45) Veröffentlichungstag und Bekanntmachung des Hinweises auf die Patenterteilung: **31.01.1996**
(21) Anmeldenummer: 91890291.7
(22) Anmeldetag: 20.11.1991
(51) Int. Cl.: H04M 1/26, H04M 1/60, H04M 19/00

(54) **Schaltungsanordnung für eine schleifenstromgespeiste Fernsprechteilnehmerstation**
Circuit arrangement for a loop current fed subscriber station
Dispositif pour un poste téléphonique alimenté par le courant de boucle

(30) Priorität: 20.11.1990 AT 2351/90
(43) Veröffentlichungstag der Anmeldung: 27.05.1992
(73) Patentinhaber: AUSTRIA MIKRO SYSTEME INTERNATIONAL AKTIENGESELLSCHAFT, A-8141 Unterpremstätten (AT)
(72) Erfinder: Alminde, Oluf, A-8073 Feldkirchen (AT)
(74) Vertreter: Haffner, Thomas M., Dr.

(56) Entgegenhaltungen:
- DE-B- 2 733 661
- DE-C- 2 536 201
- DE-C- 3 203 050
- DE-C- 3 609 706
- DE-C- 3 711 897

## Beschreibung

Die Erfindung betrifft eine Schaltungsanordnung für eine schleifenstromgespeiste Fernsprechteilnehmerstation mit Uberwachung des Verbindungsaufbaus und Wählmöglichkeit bei aufgelegtem Handapparat, mit einer einen Handapparat aufweisenden Sprechgarnitur, die über einen elektronischen Leitungsschalter an die Teilnehmerleitung anschaltbar ist, und mit einer Steuereinrichtung, die den Leitungsschalter ansteuert, an die ein Gabelumschalter sowie eine Tastatur angeschlossen sind und die über eine Begrenzungsschaltung zur Ruhestromversorgung mit der Teilnehmerleitung verbunden ist.

Aus der DE-PS 36 09 706 ist ein Verfahren zur elektronischen Nachbildung des Gabelumschalters und der Lauthörfreisprechtaste in einer Freisprech-Lauthörfernsprechstation mit Wählmöglichkeit bei aufgelegtem Handapparat bekannt, bei welcher eine elektronische Steuerimpulserzeugung kombiniert mit der Tastatur eines Wählspeichers vorgesehen ist und durch ein in eine Ader der Teilnehmerleitung eingeschleiftes Schaltmittel mit zugeordneter Steuereinrichtung die Funktion der Lauthörtaste, der Freisprechtaste, des Gabelumschaltkontaktes und des Nummernschalterimpulskontaktes vereinigt sind. Zur Ermöglichung des Schließens der Schleife im Ruhezustand der Fernsprechteilnehmerstation wird die Steuereinrichtung aus einem Energiespeicher versorgt, der im Ruhezustand durch einen kleinen Schleifenstrom in geladenem Zustand gehalten wird oder von einer in der Teilnehmerstation vorgesehenen Stützbatterie gebildet ist. An die Steuereinrichtung kann ein Wählbaustein angeschlossen sein, dessen Speicher ebenfalls aus dem Energiespeicher im Ruhezustand der Teilnehmerstation mit Energie versorgt wird, um den Speicherinhalt zu bewahren.

Eine weitere Ausgestaltung einer derartigen Schaltungsanordnung bildet den Gegenstand der DE-PS 37 11 897, wobei eine erste Steuereinrichtung Ausgänge aufweist, an welchen die Schaltzustände des Gabelumschaltkontaktes, der Lauthörtaste bzw. der Freisprechtaste signalisiert werden und welche mit einer weiteren Steuereinrichtung verbunden sind. Das Schaltmittel zum Schließen der Teilnehmerschleife wird über die erste Steuereinrichtung auf Veranlassung der weiteren Steuereinrichtung zur Aussendung von Wählimpulsen gesteuert. Zur dauernden Stromversorgung der ersten Steuereinrichtung im Ruhezustand der Teilnehmerstation liegt an den Speiseanschlüssen der ersten Steuereinrichtung die Parallelschaltung eines Kondensators und einer Z-Diode und diese Kombination ist über einen Strombegrenzer an die Teilnehmerleitung angeschlossen, wobei die Stromentnahme auf einen Wert von weniger als 20 µA begrenzt ist. Die Stromaufnahme der Steuereinrichtung muß selbstverständlich mit einem Sicherheitsabstand unterhalb des Begrenzungswertes liegen, die Stromentnahme aus der Teilnehmerleitung ist aber unabhängig davon konstant, weil der Stromüberschuß durch die Z-Diode abgeleitet wird.

Viele Betreiber von Fernsprechnetzen schreiben vor, daß die einzelnen Fernsprechteilnehmerstationen im Ruhezustand einen hohen Isolationswiderstand in der Größenordnung von 2 bis 10 MOhm aufweisen müssen. Weiters ist es in manchen Ländern unzulässig, daß von mehreren an eine einzige Teilnehmerleitung angeschlossenen Teilnehmerstationen zwei oder mehr Stationen gleichzeitig aktiv sein können, d.h. wenn eine der an die Teilnehmerleitung parallel angeschlossenen Teilnehmerstationen aktiv ist, darf keine der anderen Stationen die Leitung zusätzlich belegen können, jedoch soll ein Gespräch von der aktiven Station an eine andere Station übergeben werden können, ohne daß die Verbindung unterbrochen wird.

Bekannte Lösungen nützten die Entnahme eines geringen Stromes von etwa 15 bis 20 µA über die Teilnehmerleitung im Ruhezustand der Teilnehmerstation, wie dies eingangs erläutert wurde, was jedoch nicht von allen Betreibern von Fernsprechnetzen gestattet wird, oder es wurden in der Teilnehmerstation die Tasten für Überwachung des Verbindungsaufbaus (mit direktem Speicherzugriff) und Bedienung der Teilnehmerstation bei aufgelegtem Handapparat unmittelbar mit dem Leitungsschaltertransistor und über Dioden mit jeweils einem Stift des Wählbausteins oder der Steuereinheit verbunden. Bei Fernsprechapparaten mit automatischer Nummernwahl mittels Tasten für direkten Speicherzugriff erfordert letztere Lösung einen gesonderten Anschlußstift am Wählbaustein für jede einzelne Taste und dies ist nicht ausführbar.

In Ländern, in welchen die Belegung einer Teilnehmerleitung durch zwei oder mehr Teilnehmerstationen nicht zulässig ist, ist es erforderlich, in jedem Fernsprechapparat eine größere Anzahl mechanischer Schalter und/oder eine Vorrichtung für Leitungszuweisung vorzusehen (in Deutschland AWADO).

Die Erfindung zielt darauf ab, eine Schaltungsanordnung der eingangs angegebenen Art in der Weise auszubilden, daß die Fernsprechteilnehmerstation im Ruhezustand über die Teilnehmerleitung einen möglichst geringen Strom aufnimmt, daß jedoch zum Belegen der Leitung auf irgend eine Art (Betätigung einer Taste des Wählbausteines oder Abheben des Handapparates) der hiefür erforderliche Strom praktisch sofort zur Verfügung steht, u.zw. unabhängig davon, ob die Teilnehmerleitung bereits über den Leitungsschalter aktiviert wurde oder nicht. Bei bekannten, einen Strombegrenzer aufweisenden Schaltungsanordnungen wird der Ruhestrom in der Schleife auf einen vorbestimmten Wert begrenzt, unabhängig davon, ob sich die Teilnehmerstelle im Ruhezustand befindet oder ob eine Leitungsbelegung eingeleitet wird.

Zur Lösung der gestellten Aufgabe besteht die Erfindung bei einer Schaltungsanordnung der eingangs angegebenen Art im wesentlichen darin, daß die Begrenzungsschaltung von einem Spannungsbegrenzer gebildet ist, wobei die Steuereinrichtung als Wählkontrollschaltung ausgebildet ist.

Durch diese Maßnahme wird im Ruhezustand der Teilnehmerstation nicht ein durch einen Strombegrenzer vorgegebener Strom aufgenommen, sondern nur so viel, wie die an der der Teilnehmerleitung zugewendeten Seite des offenen Leitungsschalters angeschlossenen Bauteile oder Baugruppen in ihrem Bereitschaftszustand tatsächlich verbrauchen, und dieser Strom wird im allgemeinen beträchtlich kleiner sein als der bei den bekannten Schaltungsanordnungen vom Strombegrenzer gelieferte Strom, weil ja der vom Strombegrenzer zu liefernde Strom aus Sicherheitsgründen entsprechend höher bemessen werden muß, damit auch im Falle ungünstiger Bauteiletoleranzen und/oder Temperaturverhältnisse ein zuverlässiger Betrieb unter allen Umständen sichergestellt ist. Da der erfindungsgemäß vorgesehene Spannungsbegrenzer beim Einleiten einer Leitungsbelegung sofort eine Stromstärke liefern kann, die größer ist als der Ruhestrombedarf, erübrigt sich das Vorsehen eines besonderen Energiespeichers für derartige stoßartige Belastungen.

Vorzugsweise ist der vom Gabelumschaltereingang der Steuereinrichtung abgewendete Kontakt des Gabelumschalters mit dem Ausgang des Spannungsbegrenzers verbunden. Da der Spannungsbegrenzer auch wesentlich höhere Ströme liefern kann als den Ruhestrom der Teilnehmerstation, ist eine sofortige Leitungsbelegung ohne Vorhandensein eines Energiespeichers möglich.

Eine günstige Ausführungsform des Spannungsbegrenzers ohne Erfordernis zusätzlicher Bauteile besteht darin, daß dieser von einem MOS-Feldeffekttransistor vom Verarmungstyp gebildet ist, dessen Senkenelektrode an die positive Ader und dessen Torelektrode an die negative Ader der Teilnehmerleitung angeschlossen ist und dessen Quellenelektrode mit dem Speiseeingang der Steuereinrichtung verbunden ist. Durch Wahl eines Feldeffekttransistors mit einer der zu stabilisierenden Spannung entsprechenden Schwellenspannung erübrigt sich das Erfordernis eines gesonderten Spannungsreferenzelementes.

Eine Weiterbildung der Schaltungsanordnung besteht darin, daß zwischen der positiven Ader der Teilnehmerleitung und der Senkenelektrode des MOS-Feldeffekttransistors eine Z-Diode eingefügt ist, daß an einen Ausgang der Sprechgarnitur, von welchem eine Diode an den mit der Quellenelektrode des MOS-Feldeffekttransistors verbundenen Speiseeingang der Steuereinrichtung führt, ein Kondensator angeschlossen ist, dessen anderer Anschluß mit der negativen Ader der Teilnehmerleitung verbunden ist, und daß eine weitere Diode vorgesehen ist, deren Kathode mit der Senkenelektrode des MOS-Feldeffekttransistors und deren Anode mit einem Knoten der Verbindungsleitung zwischen dem Leitungsschalter und der Sprechgarnitur verbunden ist.

Eine andere vorteilhafte Weiterbildung der Schaltungsanordnung weist die Merkmale auf, daß zwischen der positiven Ader der Teilnehmerleitung und der Senkenelektrode des MOS-Feldeffekttransistors eine Z-Diode eingefügt ist, daß an einen Ausgang der Sprechgarnitur, von welchem eine Diode an den mit der Quellenelektrode des MOS-Feldeffekttransistors verbundenen Speiseeingang der Steuereinrichtung führt, ein Kondensator angeschlossen ist, dessen anderer Anschluß mit der negativen Ader der Teilnehmerleitung verbunden ist, daß zwischen der Z-Diode und dem Spannungsbegrenzer ein Widerstand in Reihe angeschlossen ist, daß zur Z-Diode ein elektronischer Schalter parallelgeschaltet ist und daß der Steuereingang des elektronischen Schalters an den Widerstand angeschlossen ist, so daß der Schalter die Z-Diode selbsttätig überbrückt, wenn der die Reihenschaltung von Z-Diode, Widerstand und Spannungsbegrenzer durchfließende Strom einen vorbestimmten Wert überschreitet.

Bei den zwei letzterwähnten Ausführungsformen ergibt sich durch die eingefügte Z-Diode bei niedrigen Leitungsspannungen ein höherer Isolationswiderstand. Die bei der ersteren Ausführungsform, von der Teilnehmerleitung aus gesehen, nach dem Leitungsschalter angeschlossene weitere Diode stellt die Spannungsversorgung der Steuereinrichtung und des Wählbausteins von dem Zeitpunkt an sicher, zu dem eine Leitungsbelegung eingeleitet wird, wodurch die Leitungsspannung unter die Durchbruchspannung der Z-Diode absinkt; von der mit Spannung versorgten Sprechgarnitur wird dann der Kondensator aufgeladen und über die daran angeschlossene Diode wird das Potential an der Quellenelektrode des Feldeffekttransistors so weit angehoben, daß dieser gesperrt wird, während die Stromversorgung der Steuereinrichtung mit dem Wählbaustein über diese Diode erfolgt.

Wenn aber die Teilnehmerleitung bereits durch eine von mehreren daran angeschlossenen Teilnehmerstationen belegt ist, wodurch die Spannung zwischen den Adern der Teilnehmerleitung entsprechend abgesenkt ist und kleiner ist als die Durchbruchspannung der Z-Diode, dann liefern die Spannungsbegrenzer der übrigen, im Ruhezustand befindlichen Teilnehmerstationen, deren Leitungsschalter somit offen sind, keine Versorgungsspannung für die Steuereinrichtung mit dem Wählbaustein; dadurch kann sich keiner der übrigen Teilnehmer auf die bereits belegte Teilnehmerleitung aufschalten und die Geheimhaltung des Ferngesprächs ist gewahrt.

In Versorgungsgebieten, wo die Anzahl der Fernsprechteilnehmer die Anzahl der verfügbaren Teilnehmerleitungen übersteigt, finden für die Leitungszuweisung zur Fernsprechzentrale sogenannte Konzentratoren Anwendung. Ein Konzentrator ist ein Schaltsystem, in welchem eine große Anzahl von Eingängen mit einer geringeren Anzahl von Ausgängen zu verbinden ist. Oft sind Konzentratoren an entlegenen Stellen vorgesehen und werden aus Akkumulatoren gespeist, die von der Zentrale aus über unbenützte Leitungen geladen werden. Die vom Konzentrator aus verfügbare Energie ist somit begrenzt. Wenn ein an einen Konzentrator angeschlossener Teilnehmer eine Leitungsbelegung einleitet, ist der vom Konzentrator lieferbare Strom beschränkt, größenordnungsmäßig in alten Systemen etwa 270 µA und in neueren Systemen etwa 2 mA. Bei derart kleinen verfügbaren Stromstärken soll die Teilnehmerstation die Leitungsbelegung halten können, bis sie der Zentrale zugeteilt ist. Die entsprechenden Impedanzen zum Halten der Leitungsbelegung betragen höchstens 22 kOhm bei 270 µA oder höchstens 2,25 kOhm bei 2 mA. Die Sicherheit des Einleitens einer Leitungsbelegung durch Fernsprechteilnehmer, die über einen Konzentrator versorgt werden, wird durch die bei der letzterwähnten Ausführungsform getroffenen Maßnahmen beträchtlich verbessert.

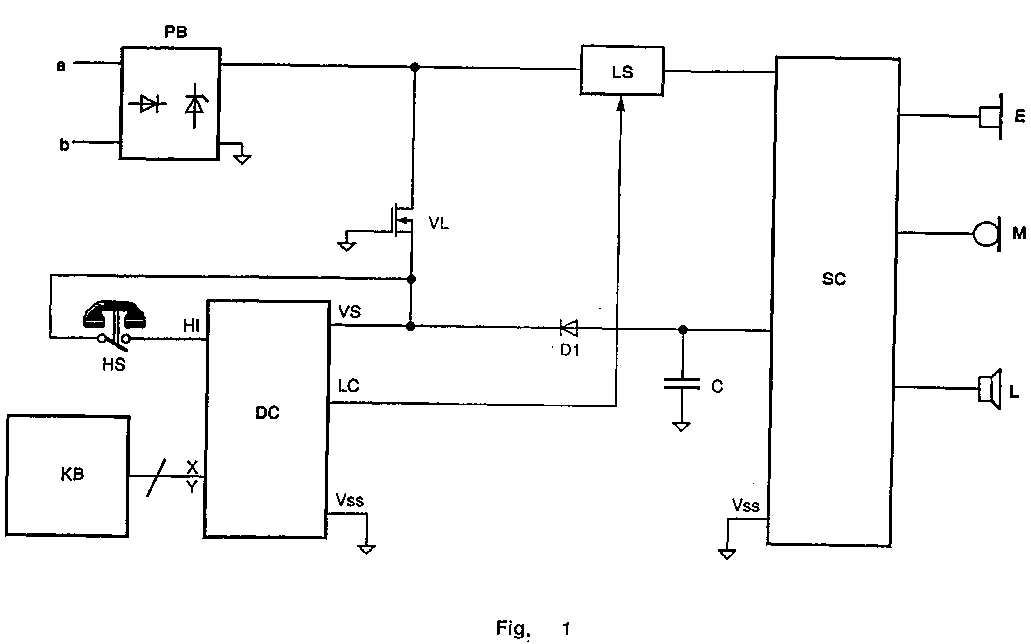

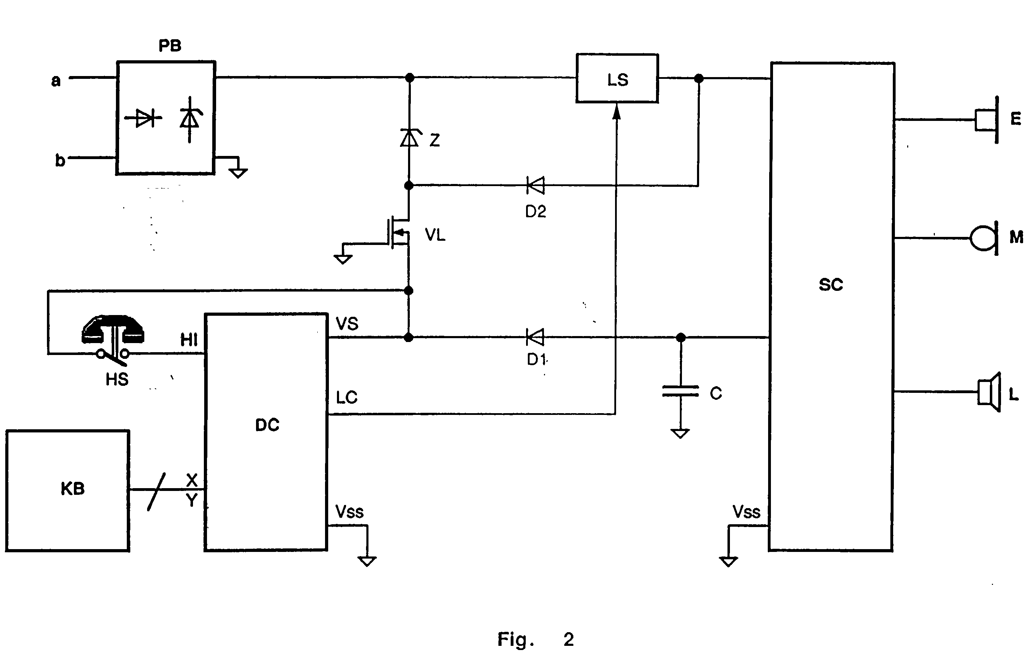

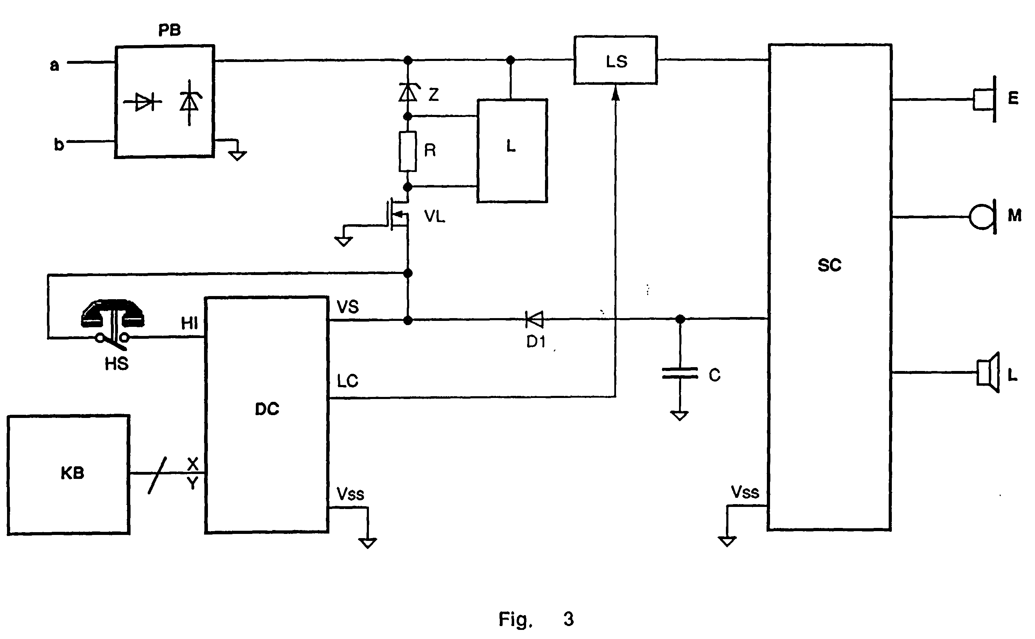

Die Erfindung wird nachfolgend an Hand der Zeichnung näher erläutert. Es zeigen: Fig.l ein prinzipielles Blockschaltbild einer erfindungsgemäßen Schaltungsanordnung, und die Fig.2 und 3 zwei Weiterbildungen der Schaltungsanordnung nach Fig.1.

Im Blockschaltbild der Fig.1 sind lediglich die für das Verständnis der Erfindung notwendigen Schaltungsteile hervorgehoben. Die Fernsprechteilnehmerstation ist über einen Verpolungsschutz PB an die Adern a und b der Teilnehmerleitung angeschlossen, wobei der Verpolungsschutz im wesentlichen einen Graetz-Brückengleichrichter sowie gegebenenfalls Überspannungsableiter enthält. Auf den Verpolungsschutz PB folgt ein von einem Transistor gebildeter Leitungsschalter LS, der die Funktionen des Gabelumschalters sowie der Schleifenunterbrechung bei Gleichstromimpulswahl und Flash (getaktete Schleifenunterbrechung) ausübt. Der Leitungsschalter LS ist von einer eine daran angeschlossene Tastatur KB aufweisenden Steuereinrichtung DC mit Wählbaustein über deren Ausgang LC gesteuert. Eine Sprechgarnitur SC, die im aktiven Zustand die Stromversorgung der Steuereinrichtung mit dem Wählbaustein übernimmt, ist mit der Teilnehmerleitung über den Leitungsschalter LS verbindbar.

Im Ruhezustand ist die Sprechgarnitur SC durch den Leitungsschalter LS von der Teilnehmerleitung getrennt und die Spannung am Anschluß VS der Steuereinrichtung DC für deren Versorgungsspannung ist dann durch die Torelektroden-Quellen-Schwellenspannung eines von einem MOS-Feldeffekttransistor gebildeten Spannungsbegrenzers VL bestimmt. In diesem Fall ist der Isolationswiderstand durch den Verpolungsschutz PB und den von der Steuereinrichtung DC aufgenommenen Ruhestrom in der Größenordnung von weniger als 2 µA bestimmt.

Die Steuereinrichtung DC mit dem Wählbaustein ist von einem Gabelschalter HS und der in Form einer X-Y-Matrix angeordneten Tastatur KB beeinflußbar. Die Tastatur KB enthält Tasten für eine Lauthöreinrichtung, für die Bedienung der Teilnehmerstation ohne Abheben des Handapparates und für direkten Speicherzugriff. Bei Aktivierung einer dieser Tasten gelangt der Oszillator der Steuereinrichtung DC mit Wählbaustein in Bereitschaft, wobei diese Taste entprellt wird. Während dieser Zeit von etwa 15 ms wird die Steuereinrichtung DC mit Wählbaustein vom Spannungsbegrenzer VL gespeist und wenn die Tastatureingabe als gültig erkannt wird, aktiviert das Ausgangssignal von LC den Leitungsschalter LS, die Sprechgarnitur SC wird mit der Teilnehmerleitung verbunden und die Steuereinrichtung DC mit dem Wählbaustein wird aus der Sprechgarnitur SC über eine Diode Dl gespeist, wobei, da diese Speisespannung höher ist als die Torelektroden-Quellen-Schwellenspannung des Spannungsbegrenzers VL, der Spannungsbegrenzer-Transistor abgeschaltet wird. Dann befindet sich die Teilnehmerstation im aktiven Zustand. Die negativen Speiseanschlüsse Vss der Baugruppen DC und SC sind mit dem entsprechenden Ausgang des Verpolungsschutzes PB verbunden, welcher das Potential der negativen Ader der Teilnehmerleitung führt. Mit diesem Ausgang sind auch die Torelektrode des Spannungsbegrenzer-Transistors und der von der Anode der Diode Dl abgewendete Anschluß eines Kondensators C verbunden, der für die Siebung der von der Sprechgarnitur SC zu liefernden Speisespannung vorgesehen ist.

Fig.2 zeigt eine Lösung, durch welche eine Leitungsbelegung dann verhindert wird, wenn die Teilnehmerleitung bereits durch eine parallel angeschlossene Teilnehmerstation belegt ist. Zu diesem Zweck ist zwischen dem das Potential der positiven Ader der Teilnehmerleitung führenden Ausgang des Verpolungsschutzes PB und der Senkenelektrode des Spannungsbegrenzer-Transistors eine Z-Diode Z mit einer Durchbruchspannung von beispielsweise 18 V eingeschaltet, durch welche eine Leitungsbelegung dann verhindert wird, wenn die Spannung zwischen den Adern a und b der Teilnehmerleitung niedriger ist als die Durchbruchspannung der Z-Diode. Außerdem ergibt sich durch die Z-Diode bei niedrigen Leitungsspannungen ein sehr geringer Leckstrom, wodurch ein sehr hoher Isolationswiderstand sichergestellt ist.

Solange die Leitungsspannung bei durch eine parallel angeschlossene Teilnehmerstation belegter Teilnehmerleitung kleiner ist als die Durchbruchspannung der Z-Diode Z, tritt am Speiseanschluß VS der Steuereinrichtung DC keine Spannung auf und damit wird eine Leitungsbelegung unmöglich gemacht. Ist dagegen die Teilnehmerleitung nicht durch eine parallel angeschlossene Teilnehmerstation belegt, dann ist die Leitungsspannung größer als die Durchbruchspannung der Z-Diode Z und die TorelektrodenQuellen-Schwellenspannung des Spannungsbegrenzers VL steht am Speiseanschluß VS zur Verfügung, so daß beim Einleiten einer Leitungsbelegung über die Tastatur KB oder den Gabelschalter HS die Steuereinrichtung DC in Bereitschaft gelangt und die Sprechgarnitur SC über den Leitungsschalter LS mit der Teilnehmerleitung verbunden wird. Dabei bricht die Leitungsspannung auf einen unterhalb der Durchbruchspannung der Z-Diode Z liegenden Wert zusammen, jedoch wird die Steuereinrichtung DC über eine Diode D2 mit Strom versorgt, bis der Kondensator C auf eine höhere Spannung aufgeladen ist, wodurch der Spannungsbegrenzer VL abgeschaltet wird.

Diese Lösung gemäß Fig.2 erlaubt bei belegter Leitung die Ubergabe eines Gesprächs von einer Teilanschlußstation an eine andere, parallel angeschlossene Teilanschlußstation, da die Startzeit der Schaltungsanordnung sehr kurz ist, nämlich die Zeit zwischen dem Auftreten einer Spannung am Speiseanschluß VS und dem Verbinden der Sprechgarnitur SC mit der Teilnehmerleitung über den Leitungsschalter LS, wodurch die Teilnehmerstation in einen Zustand niedriger Impedanz für die Leitungsbelegung gelangt, welche Zeitspanne im wesentlichen durch die Entprellzeit der gedrückten Taste oder des an den Eingang HI der Steuereinrichtung DC angeschlossenen Gabelschalters HS bedingt ist.

Fig.3 zeigt eine andere Ausbildung der Schaltungsanordnung mit weitestgehend ähnlichen Eigenschaften wie jene der Fig.2, wobei jedoch zum Unterschied gegenüber Fig.2 die Diode D2 entfällt und die Überbrückung der Z-Diode Z bei einem Belegungsvorgang durch einen elektronischen Schalter L erfolgt, dessen Betätigung in Abhängigkeit von dem durch die Reihenschaltung der Z-Diode Z, einen Widerstand R und den Spannungsbegrenzer VL fließenden Strom gesteuert ist. Die Z-Diode Z wird vom elektronischen Schalter L dann überbrückt, wenn der die genannte Reihenschaltung durchfließende Strom einen vorbestimmten Wert überschreitet.

## Patentansprüche

1. Schaltungsanordnung für eine schleifenstromgespeiste Fernsprechteilnehmerstation mit Überwachung des Verbindungsaufbaus und Wählmöglichkeit bei aufgelegtem Handapparat, mit einer einen Handapparat aufweisenden Sprechgarnitur, die über einen elektronischen Leitungsschalter (LS) an die Teilnehmerleitung anschaltbar ist, und mit einer Steuereinrichtung (DC), die den Leitungsschalter (LS) ansteuert, an die ein Gabelumschalter (HS) sowie eine Tastatur (KB) angeschlossen sind und die über eine Begrenzungsschaltung zur Ruhestromversorgung mit der Teilnehmerleitung verbunden ist, dadurch gekennzeichnet, daß die Begrenzungsschaltung von einem Spannungsbegrenzer (VL) gebildet ist und daß die Steuereinrichtung (DC) als Wählkontrollschaltung ausgebildet ist.

2. Schaltungsanordnung nach Anspruch 1, dadurch gekennzeichnet, daß der vom Gabelumschaltereingang der Steuereinrichtung (DC) abgewendete Kontakt des Gabelumschalters mit dem Ausgang des Spannungsbegrenzers (VL)verbunden ist.

3. Schaltungsanordnung nach Anspruch 1 oder 2, dadurch gekennzeichnet, daß der Spannungsbegrenzer (VL) ein MOS-Feldeffekttransistor vom Verarmungstyp ist, dessen Senkenelektrode an die positive Ader und dessen Torelektrode an die negative Ader der Teilnehmerleitung angeschlossen ist und dessen Quellenelektrode mit dem Speiseeingang der Steuereinrichtung (DC) verbunden ist.

4. Schaltungsanordnung nach Anspruch 3, dadurch gekennzeichnet, daß zwischen der positiven Ader der Teilnehmerleitung und der Senkenelektrode des MOS-Feldeffekttransistors (VL) eine Z-Diode (Z) eingefügt ist, daß an einen Ausgang der Sprechgarnitur, von welchem eine Diode (Dl) an den mit der Quellenelektrode des MOS-Feldeffekttransistors (VL) verbundenen Speiseeingang der Steuereinrichtung (DC) führt, ein Kondensator angeschlossen ist, dessen anderer Anschluß mit der negativen Ader der Teilnehmerleitung verbunden ist, und daß eine weitere Diode (D2) vorgesehen ist, deren Kathode mit der Senkenelektrode des MOS-Feldeffekttransistors (VL) und deren Anode mit einem Knoten der Verbindungsleitung zwischen dem Leitungsschalter (LS) und der Sprechgarnitur (SC) verbunden ist.

5. Schaltungsanordnung nach Anspruch 3, dadurch gekennzeichnet, daß zwischen der positiven Ader der Teilnehmerleitung und der Senkenelektrode des MOS-Feldeffekttransistors (VL) eine Z-Diode (Z) eingefügt ist, daß an einen Ausgang der Sprechgarnitur (SC), von welchem eine Diode (Dl) an den mit der Quellenelektrode des MOS-Feldeffekttransistors (VL) verbundenen Speiseeingang der Steuereinrichtung führt, ein Kondensator (C) angeschlossen ist, dessen anderer Anschluß mit der negativen Ader der Teilnehmerleitung verbunden ist, daß zwischen der Z-Diode (Z) und dem Spannungsbegrenzer (VL) ein Widerstand (R) in Reihe angeschlossen ist, daß zur Z-Diode (Z) ein elektronischer Schalter (L) parallelgeschaltet ist und daß der Steuereingang des elektronischen Schalters (L) an den Widerstand (R) angeschlossen ist, so daß der Schalter (L) die Z-Diode (Z) selbsttätig überbrückt, wenn der die Reihenschaltung von Z-Diode (Z), Widerstand (R) und Spannungsbegrenzer (VL) durchfließende Strom einen vorbestimmten Wert überschreitet.

## Claims

1. A circuit arrangement for a loop current fed telephone subscriber's station including monitoring of the connection setup and on-hook dialling, comprising a speech equipment including a handset and capable of being connected to the subscriber line via an electronic line switch (LS), and comprising a controller (DC) activating the line switch (LS) and to which a hook switch (HS) as well as a keyboard (KB) are connected, said controller being connected with the subscriber line via a delimiting circuit for feeding closed-circuit current, characterized in that the delimiting circuit is formed by a voltage limiter (VL) and that the controller (DC) is configured as a dial control circuit.

2. A circuit arrangement according to claim 1, characterized in that the contact of the hook switch, that faces away from the hook switch entry of the controller (DC) is connected with the exit of the voltage limiter (VL).

3. A circuit arrangement according to claim 1 or 2, characterized in that the voltage limiter (VL) is a depletion type MOS field-effect transistor whose drain electrode is connected to the positive wire and whose gate electrode is connected to the negative wire, of the subscriber line and whose source electrode is connected with the feed entry of the controller (DC).

4. A circuit arrangement according to claim 3, characterized in that a Z diode (Z) is inserted between the positive wire of the subscriber line and the drain electrode of the MOS field-effect transistor (VL), that a capacitor is connected to one exit of the speech equipment, from which a diode (D1) leads to the feed entry of the controller (DC) that is connected with the source electrode of the MOS field-effect transistor (VL), the other contact of said capacitor being connected with the negative wire of the subscriber line, and that a further diode (D2) is provided, whose cathode is connected with the drain electrode of the MOS field-effect transistor (VL) and whose anode is connected with a node of the connection line between the line switch (LS) and the speech equipment (SC).

5. A circuit arrangement according to claim 3, characterized in that a Z diode (Z) is inserted between the positive wire of the subscriber line and the drain electrode of the MOS field-effect transistor (VL), that a capacitor (C) is connected to one exit of the speech equipment, from which a diode (D1) leads to the feed entry of the controller (DC) that is connected with the source electrode of the MOS field-effect transistor (VL), the other contact of said capacitor being connected with the negative wire of the subscriber line, that a resistor (R) is connected in series between the Z diode (Z) and the voltage limiter (VL), that an electronic switch (L) is connected in parallel with the Z diode (Z), and that the control entry of the electronic switch (L) is connected to the resistor (R) in a manner that the switch (L) automatically bridges the Z diode (Z) in case the current flowing through the series connection of Z diode (Z), resistor (R) and voltage limiter (VL) exceeds a predetermined value.

## Revendications

1. Agencement de circuit pour un poste téléphonique d'abonné alimenté par le courant de boucle, avec surveillance de la formation de la communication et possibilité de numérotation sans décrocher le combiné, comprenant un ensemble téléphonique muni d'un combiné, qui peut être couplé par l'intermédiaire d'un commutateur de ligne électronique (LS) avec la ligne d'abonné, et un dispositif de commande (DC) commandant le commutateur de ligne (LS), auquel sont reliés une fourche interruptrice (HS) ainsi qu'un clavier (KB) et qui est branché sur la ligne d'abonné par l'intermédiaire d'un circuit de limitation pour l'alimentation en cou-rant de repos, **caractérisé en ce** que le cir-cuit de limitation est constitué par un limiteur de tension (VL), et que le dispositif de commande (DC) est réalisé sous la forme d'un circuit de contrôle de numérotation.

2. Agencement de circuit selon la revendication 1, caractérisé en ce que le contact de la fourche interruptrice opposé à l'entrée de la fourche interruptrice du dispositif de commande (DQ) est relié à la sortie du limiteur de tension (VL).

3. Agencement de circuit selon les revendications 1 ou 2, caractérisé en ce que le limiteur de tension (VL) est un transistor MOS à effet de champ à appauvrissement dont l'électrode de drain est reliée au conducteur positif, dont l'électrode de grille est reliée au conducteur négatif de la ligne d'abonné et dont l'électrode de source est reliée à l'entrée d'alimentation du dispositif de commande (DC).

4. Agencement de circuit selon la revendication 3, caractérisé en ce qu'entre le conducteur positif de la ligne d'abonné et l'électrode de drain du transistor MOS à effet de champ (VL) est insérée une diode Zener (Z), qu'à une sortie de l'ensemble téléphonique à partir de laquelle une diode (D1) conduit à l'entrée d'alimentation du dispositif de commande (DC) reliée à l'électrode de source du transistor MOS à effet de champ (VL), est relié un condensateur dont l'autre borne est reliée au conducteur négatif de la ligne d'abonné, et qu'il est prévu une seconde diode (D2) dont la cathode est reliée à l'électrode de drain du transistor MOS à effet de champ (VL) et dont l'anode est reliée à un noeud de la ligne de liaison entre le commutateur de ligne (LS) et l'ensemble téléphonique (SC).

5. Agencement de circuit selon la revendication 3, caractérisé en ce qu'entre le conducteur positif de la ligne d'abonné et l'électrode de drain du transistor MOS à effet de champ (VL) est insérée une diode Zener (Z), qu'à l'une des sorties de l'ensemble téléphonique (SC) à partir de laquelle une diode (D1) conduit à l'entrée d'alimentation du dispositif de commande reliée à l'électrode de source du transistor MOS à effet de champ (VL), est relié un condensateur (C) dont l'autre borne est reliée au conducteur négatif de la ligne d'abonné, qu'une résistance (R) est montée en série entre la diode Zener (Z) et le limiteur de tension (VL), qu'un commutateur électronique (L) est monté en parallèle avec la diode Zener (Z), et que l'entrée de commande du commutateur électronique (L) est reliée à la résistance (R), de sorte que le commutateur (L) court-circuite automatiquement la diode Zener (Z) lorsque le courant parcourant le montage en série comprenant la diode Zener (Z), la résistance (R) et le limiteur de tension (VL) dépasse une valeur prédéterminée.
